# EUROPEAN PATENT APPLICATION

(11) **EP 3 431 323 A1**
(43) Date of publication of application: **23.01.2019**
(21) Application number: 17181580.6
(22) Date of filing: 17.07.2017
(51) Int. Cl.: B60L 11/14, B60L 11/18

(54) **A METHOD AND A DEVICE FOR OPERATING A POWER-DRIVEN VEHICLE WITHIN AN URBAN AREA**

(71) Applicant: Robert Bosch GmbH, 70442 Stuttgart (DE)
(72) Inventor: Ciccarese, Paolo, 73043 Copertino (IT)

(57) **Abstract**

The invention relates to a method for operating a power-driven vehicle (1) having an on-board engine, in particular an internal combustion engine, within an urban area. According to the invention, when entering the urban area the vehicle (1) is temporarily connected with an off-board electric power train (2) and the on-board engine of the vehicle (1) is shut off.

The invention further relates to a device (10) for operating a vehicle (1) having an on-board engine, in particular an internal combustion engine, within an urban area.

## Description

The invention relates to a method and a device for operating a power-driven vehicle within an urban area, in particular in inner cities. Of course also smaller areas e.g. districts, shopping malls, university campus, airports etc. can have benefit from a correspondent application of the idea.

### Background of the invention

Most big cities are strained by the volume of traffic resulting in traffic congestion. Thus, limited mobility is one of the most prevalent problems in big cities. Other major issues caused by the volume of traffic are air pollution, noise and the safety of pedestrians and cyclists participating in the traffic. Measures and provisions taken by the government or local authorities in order to provide relief are often hardly sustainable and/or unfeasible, e.g. alternate license plate circulation and/or raising the parking fees. Already put into practice and very common is the installation of low- or zero-emission-zones in order to cut off increasingly wider areas of the cities from regular traffic.

Considering that an increase of traffic accompanies population growth, the situation will intensify and become more complex in the future. Thus, new technologies are required that enable a new generation of vehicles, i.e. emission-free vehicles capable of interacting with the environment and/or other vehicles for higher safety standards.

Especially the demand for clean cars has pushed the development of electric vehicles. However, customer acceptance is still low because of higher costs and limited battery capacities. Besides, facilities for recharging batteries are lacking and battery charging times are too long. After all, due to abrasion wear of tyres and brakes even electric vehicles are not entirely emission free.

Further developments relate to technologies that enable vehicles to drive autonomously. This project seems to be the most challenging since it requires an answer to the question of how to deal with artificial intelligence. As a consequence, new statutes and laws have to be enacted. Whereas under technical aspects, most problems are solvable or have already been solved.

As shown above, the successful implementation of new technologies depends on a multitude of factors. In particular, public authorities have to setup the necessary infrastructure and legislation. Furthermore, customer acceptance has to be raised by offering new technologies at reasonable prices. However, due to the lengthy average lifetime of a car, the economically minded customer will not trade his car in for an electric car if he has just recently bought it. Thus, cars having an internal combustion engine will not vanish into thin air.

Therefore, the object of the present invention is to reduce environmental problems in inner cities without restricting access for vehicles with an internal combustion engine. The object is achieved by a method according to claim 1 and a device according to claim 9. The dependant claims relate to preferred embodiments of the invention.

### Disclosure of the invention

What is suggested is a method for operating a power-driven vehicle having an on-board engine, in particular an internal combustion engine, within an urban area. According to the present invention, when entering the urban area, the vehicle is temporarily connected with an off-board electric power train and the on-board engine of the vehicle is shut off. Thus, within the urban area the vehicle is solely operated by means of the off-board electric power train. As a result, the vehicle is transformed into a low- or zero-emission vehicle reducing the pollution within the urban area. Besides that, environmental noise is minimized.

Outside the urban area the vehicle can be operated conventionally, i.e. by means of its on-board engine, in particular with its internal combustion engine. The on-board engine enables the vehicle to cover greater distances. Thus, outside the urban area the off-board electric power train is disconnected from the vehicle.

Preferably, the off-board electric power train is disconnected from the vehicle after the vehicle has been parked within the urban area or when leaving the urban area. As already mentioned, outside the urban area the vehicle is preferably operated by its on-board engine. Within the urban area there is no need for the off-board electric power train, once the vehicle has been parked. Accordingly, the disconnected off-board electric power train is available to be connected with another vehicle provided that the battery charge is high enough. Otherwise, the battery of the disconnected off-board electric power train can be recharged.

Disconnecting the off-board electric power train from a vehicle that has been parked within the urban area helps to reduce the necessary amount of off-board electric power trains that have to be held available. Thus, when entering the urban area the vehicle may be connected firstly to an off-board electric power train in order to steer the vehicle to a certain destination within the urban area. Once the destination has been reached the vehicle may be parked by the off-board electric power train. The off-board electric power train is then disconnected from the vehicle. To continue the route within the urban area or to leave the urban area completely, the vehicle may be connected with another off-board electric power train that is available at that time.

The temporary operation of a vehicle by an off-board electric power train according to the present invention would help to save fuel. This makes the invention attractive for users. In return, the use of an off-board electric power train may be subject to charges in order to cover the costs of installing and maintaining the necessary infrastructure. This makes the suggested method interesting for local authorities or the private economy, which will provide the service. Furthermore, a scalable roll-out is possible, at first starting within a smaller zone and gradually expanding over the entire urban area. This will help to keep investment costs low.

According to a preferred embodiment of the invention, the vehicle is autonomously parked by the off-board electric power train. Thus, the off-board electric power train is preferably constructed such that it can drive autonomously, whether or not it is connected to a vehicle. This enables the off-board electric power train to drive on its own from a facility for storing and/or charging to a vehicle or from a vehicle to another vehicle or from a vehicle back to a facility for storing and/or charging. In order to drive autonomously, the off-board electric power train is preferably equipped with hardware and/or software allowing navigation within the urban area. As a result, the off-board electric power train will always find the shortest way to a destination such that driving time and energy consumption are reduced. Furthermore, the navigation system can provide information about free parking spaces such that driving time, in particular cruising time, is minimized. At the same time congestion problems can be solved.

Accordingly, when connected to a vehicle, the off-board electric power train steers the vehicle autonomously. The driver of the vehicle then becomes a passenger being chauffeured by the off-board electric power train to a certain destination within the urban area. Thereby it is guaranteed that traffic regulations, in particular speed limits, are met. As a result, the safety of vehicle passengers as well as pedestrians and/or cyclists within the urban area is increased.

The off-board electric power train comprises at least one rechargeable battery. Recharging the battery preferably takes place at a charging facility while the off-board electric power train is disconnected from a vehicle. Thus, times during which the off-board electric power train is inoperative can be used for recharging. Preferably, the charging facility is also a storing facility such that, after recharging the battery, the off-board electric power train can be stored and held available for the next use.

A storing and/or charging facility is preferably located at an entrance to the urban area, so that the off-board electric power train can be connected with a vehicle before it has entered the urban area. Ideally, the urban area is surrounded by a plurality of storage and/or charging facilities in order to simplify access.

Further preferably, the off-board electric power train is connected to the vehicle and/or disconnected from the vehicle at a facility for storage and/or charging a plurality of off-board electric power trains. This ensures availability of an off-board electric power train for each vehicle arriving at the facility. Besides, the battery of a disconnected off-board electric power train can be immediately recharged.

Operating a vehicle according to the present invention requires that the off-board electric power train is mechanically connected to the vehicle, preferably to the front and/or to the back of the vehicle, e.g. at the tow-bar mounting position. The vehicle itself may comprise pre-installed fasteners and/or a pre-installed flange for attaching the off-board electric power train to the vehicle. Preferably, the off-board electric power train embodies a "plug and drive" off-board device that can be easily attached.

The off-board electric power train preferably comprises at least one wheel which enables the device to drive autonomously.

Further preferably, the off-board electric power train is attached to the vehicle such that at least two wheels of the vehicle are lifted from the ground. The lifted wheels are replaced by the at least one wheel of the off-board electric power train. In order to lift the car, the off-board electric power train preferably comprises lifting means.

Alternatively, the off-board electric power train can be attached to the vehicle such that a driving force of the electric power train is directly or indirectly transmitted to the front or rear wheels, in particular to the driving wheels, of the vehicle, e.g. the driving force can be indirectly transmitted by means of a belt or a chain.

For controlling the operation of the vehicle, it is suggested, that the off-board electric power train is connected to an on-board control unit of the vehicle and/or an off-board control device handed out to the driver. Preferably the off-board electric power train is connected wirelessly to the on-board control unit and/or the off-board control device which simplifies the setting up of the connection(s). Alternatively, a wired connection between the off-board electric power train and the control unit of the vehicle can be chosen, enabling a torque control by the standard accelerator and brake pedal.

The off-board control device, in particular in the form of a control pad or tablet, is preferably designed such that the driver or passenger of the vehicle may interact with the off-board electric power train. Thus, the off-board control device preferably comprises means for entering data, e.g. a keypad and/or a microphone, and/or a display for monitoring the operation of the vehicle by the off-board electric power train.

Preferably, the off-board control device comprises fasteners, e.g. clamps, by means of which the off-board control device can be mechanically connected to the vehicle, in particular to a dashboard or a steering wheel of the vehicle. Further preferably, the off-board control device is fastened to the vehicle in such a way that the driver can detach and return the device when leaving the urban area.

The fastening of the off-board control device to a standard steering wheel of the vehicle has the further advantage that the steering wheel can be controlled by the off-board electric power train via the off-board control device. Furthermore, the off-board electric power train may control acceleration and deceleration, in particular the brakes of the vehicle, via the off-board control device.

It is further suggested, that the vehicle and/or the off-board electric power train is/are connected, preferably wirelessly, to a communication network and/or an external server in order to receive data related to the actual geographical position of the vehicle and/or the off-board electric power train, the actual traffic volume, actual road conditions, road works and/or free parking spaces. This data will enable the off-board electric power train to always find the shortest route to a certain destination within the urban area, thereby helping to prevent lengthy driving times and traffic congestions.

Preferably, in operation, the off-board electric power train interacts with the environment, in particular with other vehicles, other off-board electric power trains, cyclists, pedestrians and/or facilities for traffic management. The interaction helps to avoid accidents, thereby increasing the safety of any person participating in the traffic. To allow interaction with the environment, the off-board electric power train preferably comprises a plurality of sensors.

Facilities for traffic management comprise any kind of traffic control devices, both stationary and mobile devices, such as traffic lights and/or street signs. Besides that, the term "facilities for traffic management" also comprises devices for collecting traffic data, centrally storing the data and/or providing the traffic data to on-board navigation systems.

By disconnecting the off-board electric power train from a vehicle after the vehicle has been parked, the efficiency of the system is raised, i.e. less off-board electric power trains are needed for a larger amount of vehicles. However, before leaving the urban area or before driving to a second destination within the urban area, the driver first has to call for another off-board electric power train. This is preferably done by an application on a mobile device, e.g. a smartphone or a tablet. Via the application the driver preferably has access to an off-board electric power train managing system by means of which he even could make reservations.

In order to achieve the above-mentioned object, the invention further relates to a device for operating a power-driven vehicle having an on-board engine, in particular an internal combustion engine, within an urban area. According to the invention, the device comprises an electric power train connectable to the vehicle such that the electric power train of the device steers the vehicle while the on-board engine of the vehicle is shut off.

When connected to a power-driven vehicle with an on-board engine, in particular an internal combustion engine, the device allows the operation of the vehicle according to the previously described method for operating a power-driven vehicle. The electric power train of the device then converts to an off-board electric power train for the respective vehicle.

The device is preferably held available in a facility for storing such devices located at the entrance of the urban area, such that a vehicle arriving at the facility can be equipped with a device before entering the urban area. The vehicle is thereby converted into a low- or zero-emission vehicle contributing to a better air quality within the urban area. Furthermore, noise can be reduced.

Preferably, the device comprises at least one rechargeable battery providing a current. Recharging the battery preferably takes place at the facility for storing the device, such that during storing times the battery can be recharged.

Further preferably, the device comprises at least one wheel holding up the device. Thus, the device represents a self-contained vehicle capable of moving from one site of operation to another or to a facility for storing and/or charging the device, whether or not the device is connected to a vehicle.

According to a preferred embodiment of the invention, the device comprises fastening means to mechanically fasten the device to the vehicle. Preferably, the device is fastened to the vehicle in such a manner so as to allow for detaching the device from the vehicle after the vehicle has been parked. During the time the vehicle is parked the detached device can be attached to another vehicle or sent back to a charging facility for recharging. Preferably, the fastening means comprise at least one flange and/or screws.

Alternatively or complementary, the device may comprise transmission means, in order to transmit a driving power from the electric power train to the vehicle, such that the electric power train may substitute the on-board engine of the vehicle. The transmission means preferably comprise a belt or a chain, by means of which a driving force of a rotating shaft can be transmitted to the vehicle.

According to another preferred embodiment of the invention, the device for operating a power-driven vehicle within an urban area further comprises a control device that is attachable to the vehicle, preferably to the steering wheel of the vehicle. Thus, the control device is arranged at a position close to the driver. The control device allows interaction of the driver with the off-board electric power train.

Preferably, the control device has a display enabling the driver to monitor the operation of the vehicle.

Further preferably, the control device has fastening means, e.g. clamps, for temporarily fastening the control device to the vehicle, in particular to the steering wheel of the vehicle. Clamps have the advantage that the control device can be easily detached from the vehicle, in particular from the steering wheel of the vehicle.

Preferred embodiments of the invention are subsequently described together with the enclosed drawings.

### Brief description of the drawings

Fig. 1 comprises a) a top plan view, b) a side elevation view, and c) another side elevation view of a vehicle with a device according to a first preferred embodiment of the invention, and d) a perspective view of the device, and e) a top plan view of the steering wheel;
Fig. 2 comprises a) a top plan view and b) a side elevation view of a vehicle with a device according to a second preferred embodiment of the invention, and c) a top plan view and d) a side elevation view of the device;
Fig. 3 comprises a) a top plan view, b) a side elevation view and c) another side elevation view of a vehicle with a device according to a third preferred embodiment of the invention, and d) a top plan view of the device;
Fig. 4 comprises a) a top plan view, b) a side elevation view and c) another side elevation view of a vehicle with a device according to a forth preferred embodiment of the invention, and d) a top plan view of the device;
Fig. 5 comprises a) a top plan view, b) a side elevation view and c) another side elevation view of a vehicle with a device according to a fifth preferred embodiment of the invention, and d) a top plan view of the device;
Fig. 6 comprises a) a top plan view and b) a side elevation view of a vehicle with a device according to a sixth preferred embodiment of the invention, and c) a side elevation of the device;
Fig. 7 comprises a) a top plan view and b) a side elevation view of a vehicle with a device according to a seventh preferred embodiment of the invention, and c) a top plan view of the steering wheel;
Fig. 8 comprises a) a top plan view and b) a side elevation view of a vehicle with a device according to a eighth preferred embodiment of the invention, and c) a top plan view of the steering wheel;
Fig. 9a) to i) show the process of connecting a vehicle with a device according to the invention.

### Detailed description of the drawings

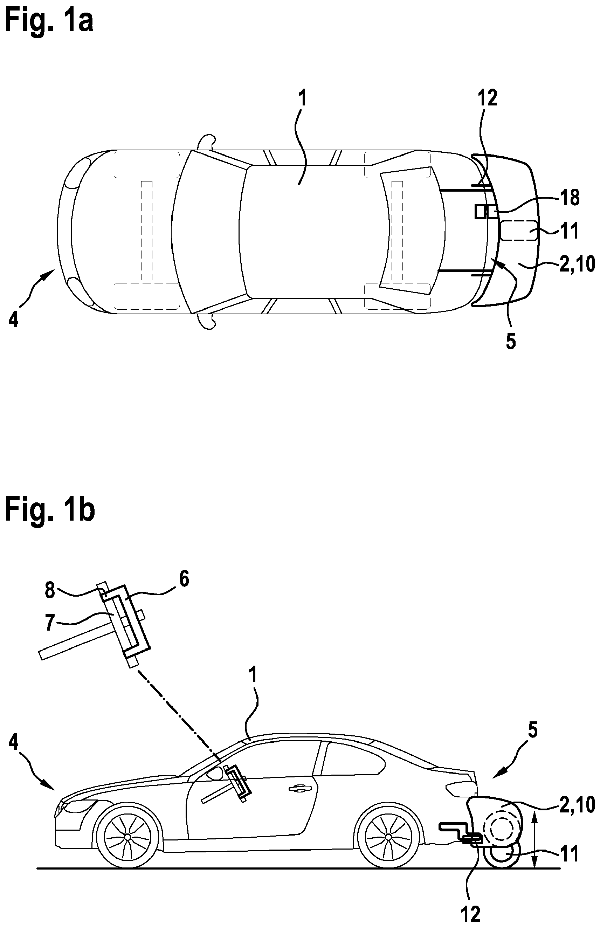

Fig. 1a) to c) show a vehicle 1, wherein the vehicle 1 is a conventional car having an internal combustion engine. In order to convert the vehicle 1 to a low- or zero-emission vehicle 1, a device 10 comprising an electric power train 2 is connected to the vehicle 1. The electric power train 2 of the device 10 provides the necessary driving power such that the internal combustion engine of the vehicle 1 can be shut off. The vehicle 1 is then operated by the device 10 or rather the "off-board" electric power train 2 of the device 10.

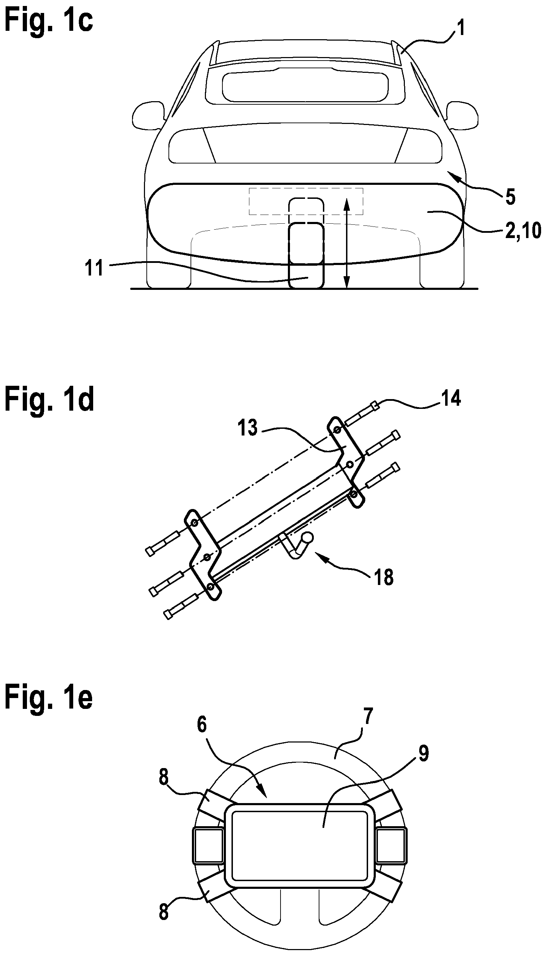

According to Fig. 1a) to c) the device 10 is arranged at a back 5 of the vehicle 1 and detachably fastened to the vehicle 1 at a tow bar position 18. Besides, fastening means 12 in form of flanges 13 and screws 14 are provided for detachably fastening the device 10 to the chassis of the vehicle 1 (see Fig. 1 d)). The device 10 is held up by a wheel 11, that can be moved up and down for levelling.

The device 10 further comprises a control device 6 in form of a control pad having a display 9 for monitoring the operation of the vehicle 1 and for interacting with the device 10. The control pad is detachably fastened to a steering wheel 7 of the vehicle 1 by means of clamps 8 (see Fig. 1 e)).

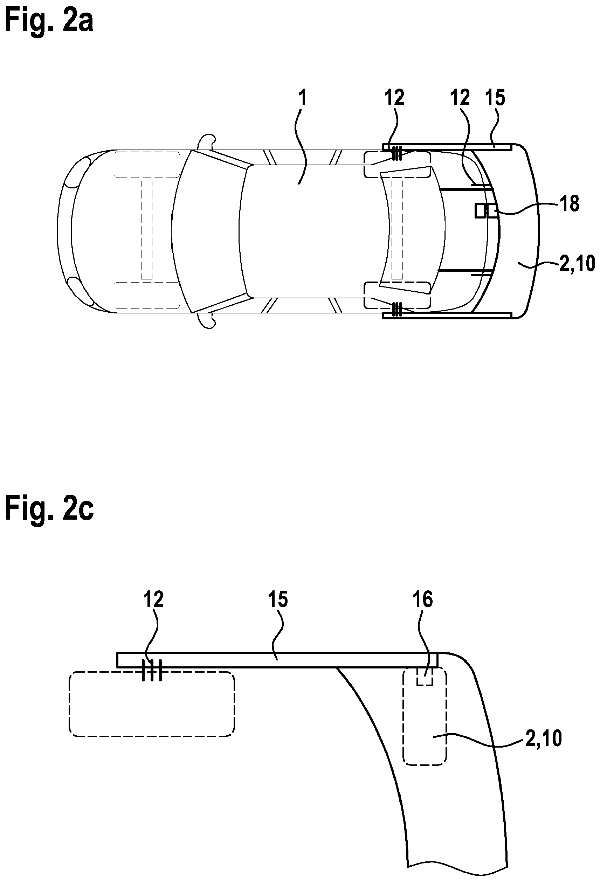

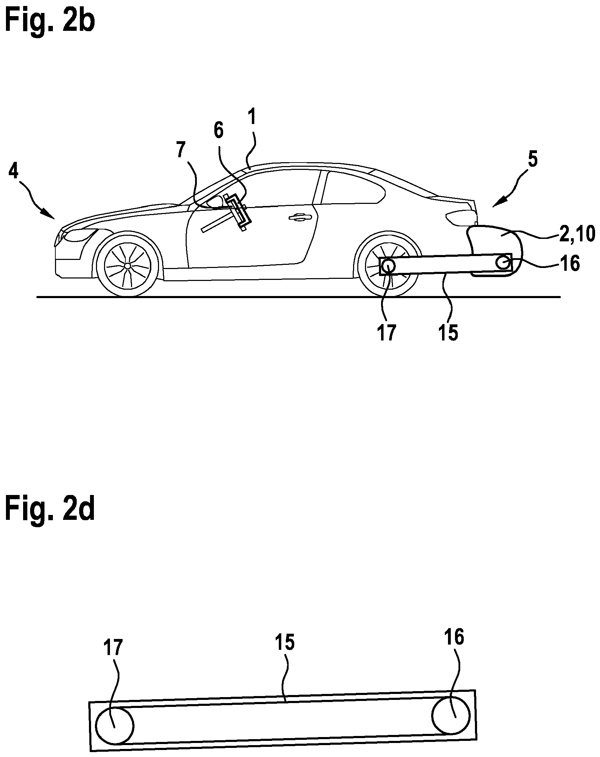

Fig. 2 a) and b) show a vehicle 1 and a device 2 according to a second preferred embodiment of the invention. The device 2 is again arranged at the back 5 of the vehicle 1 and detachably fastened to the vehicle 1 at tow bar position 18. Fastening means 12 are provided for detachably fastening the device 10 to the chassis of the vehicle 1.

Furthermore, the device 10 comprises transmission means 15 for transmitting a driving power of the electric power train 2 of the device 10 to a rear wheel axis 17. The transmission means 15 comprise a belt connecting the rear wheel axis 17 with a rotatable shaft 16 of the device 10 (see Fig. 2 c)).

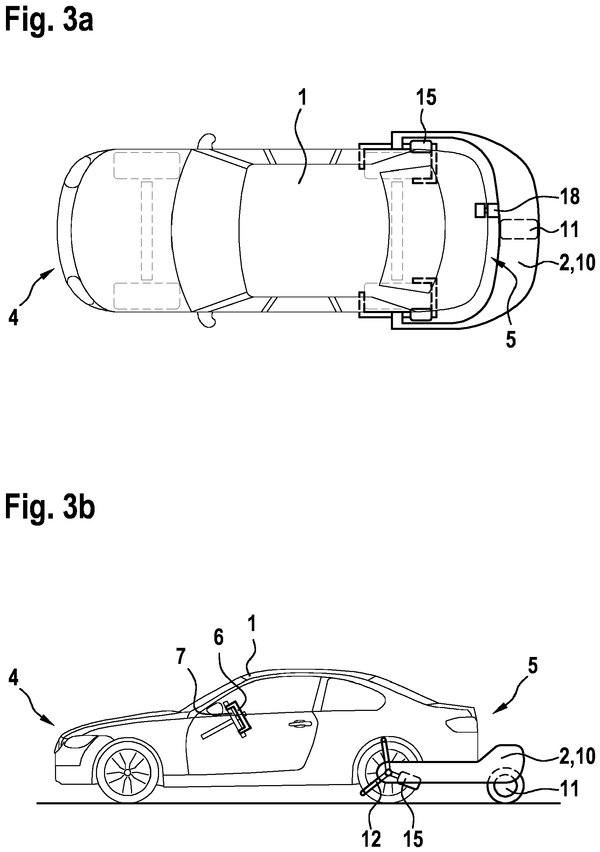

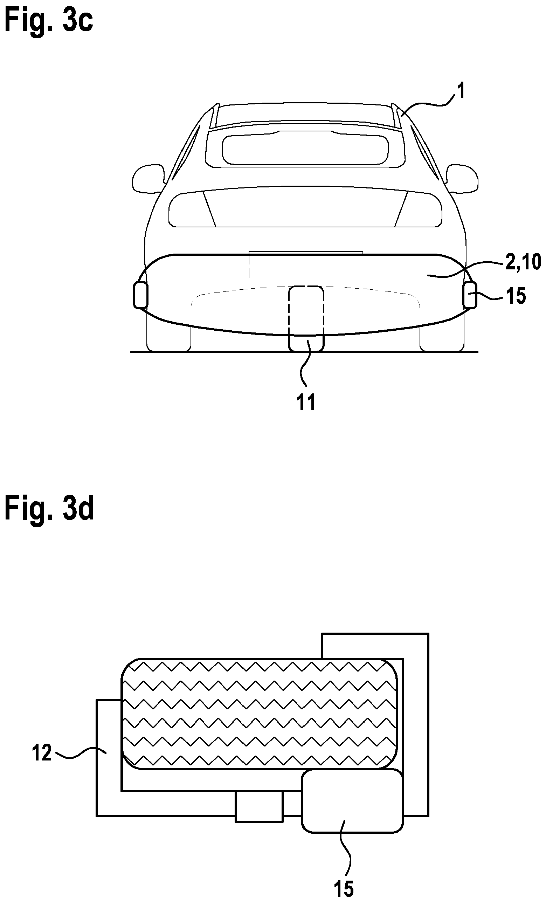

Fig. 3a) to c) show a vehicle 1 and a device 10 according to a third preferred embodiment of the invention. The device 10 comprises transmission means 15 directly acting on the rear wheels of the vehicle 1. Besides that, fastening means 12 are provided engaging with the rear wheels such that they may still rotate (see Fig. 3 d)).

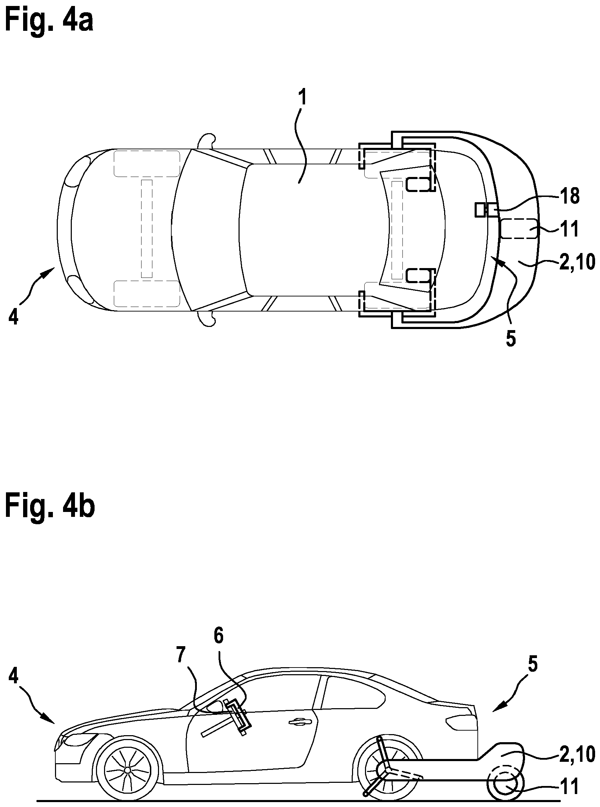

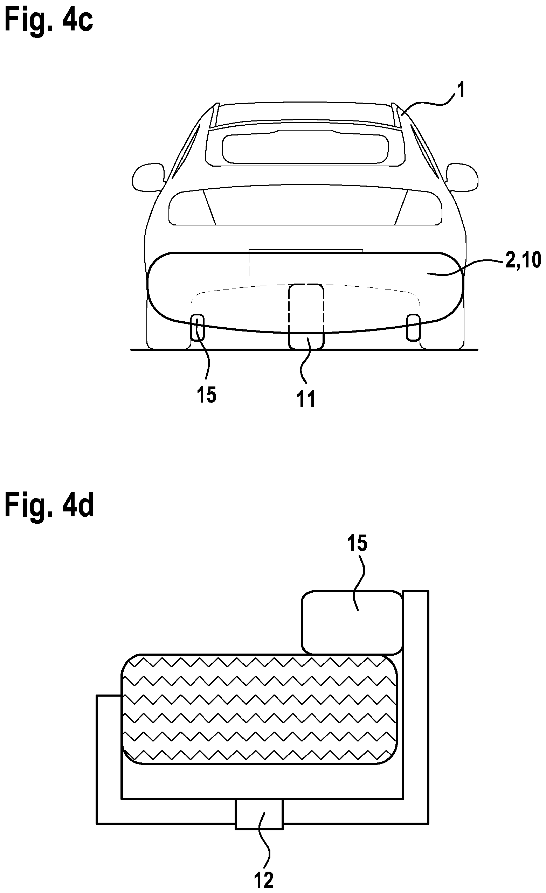

Fig. 4a) to d) show a modification of the embodiment according to Fig. 3a) to d). Differing from the embodiment of Fig. 3a) to d), in Fig. 4a) to d) the transmission means 15 are arranged between the two rear wheels of the vehicle 1.

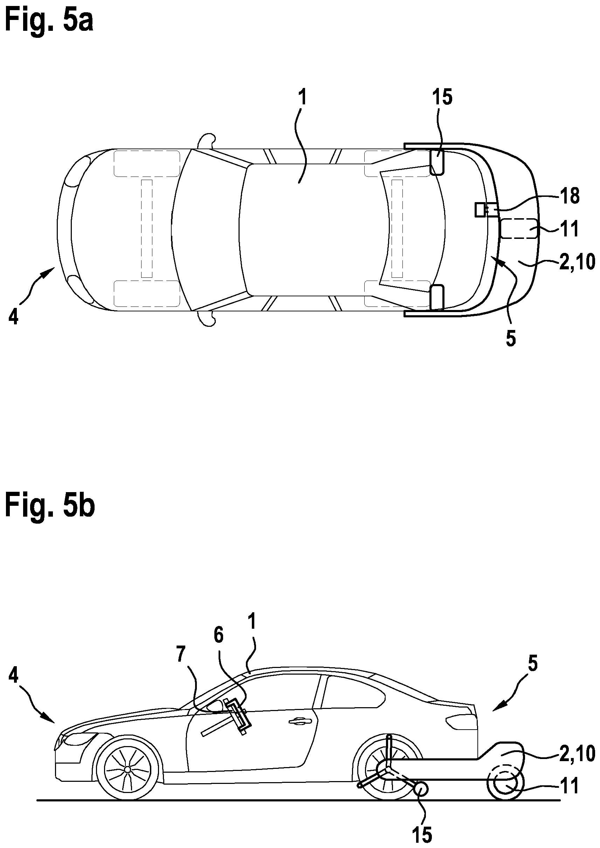

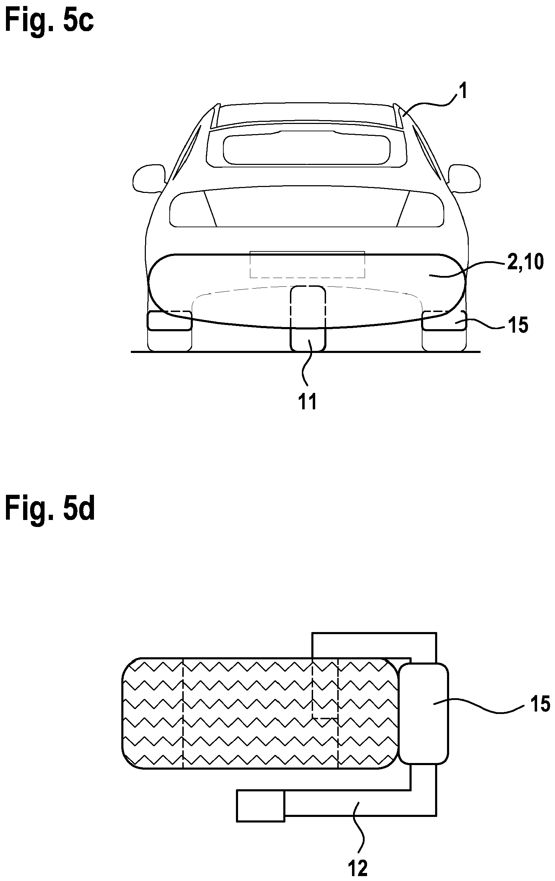

Fig. 5a) to d) show a further modification. Here, the transmission means 15 are arranged such that they contact the wheel treads.

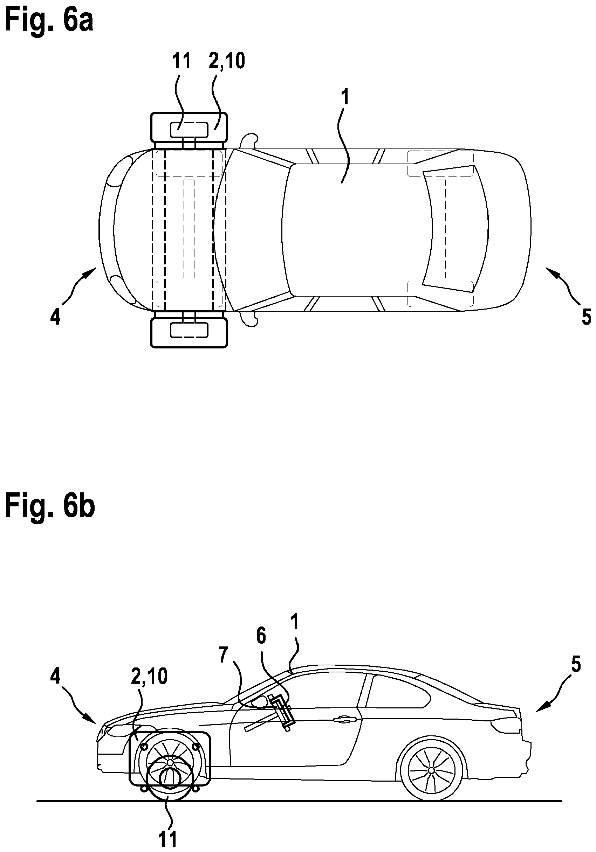

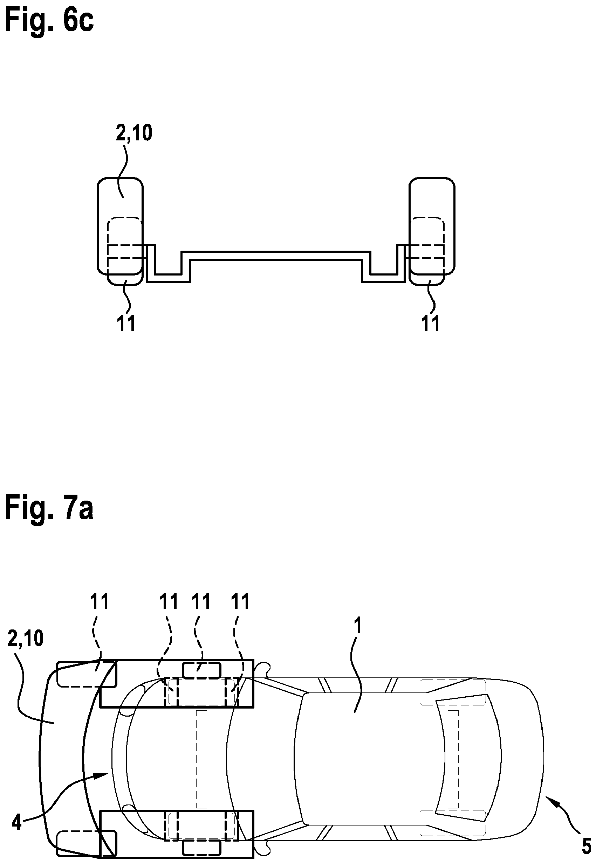

Fig. 6a) to c) show a vehicle 1 and a device 10 according to a sixth preferred embodiment of the invention. In this embodiment the device 10 is arranged near a front 4 of the vehicle 1, such that it engages with the front wheels of the vehicle 1. The device 10 comprises two wheels 11 via which the vehicle 1 is held up such that the front wheels are lifted from the ground. In operation, the electric power train 2 of the device 10 pulls the vehicle 1.

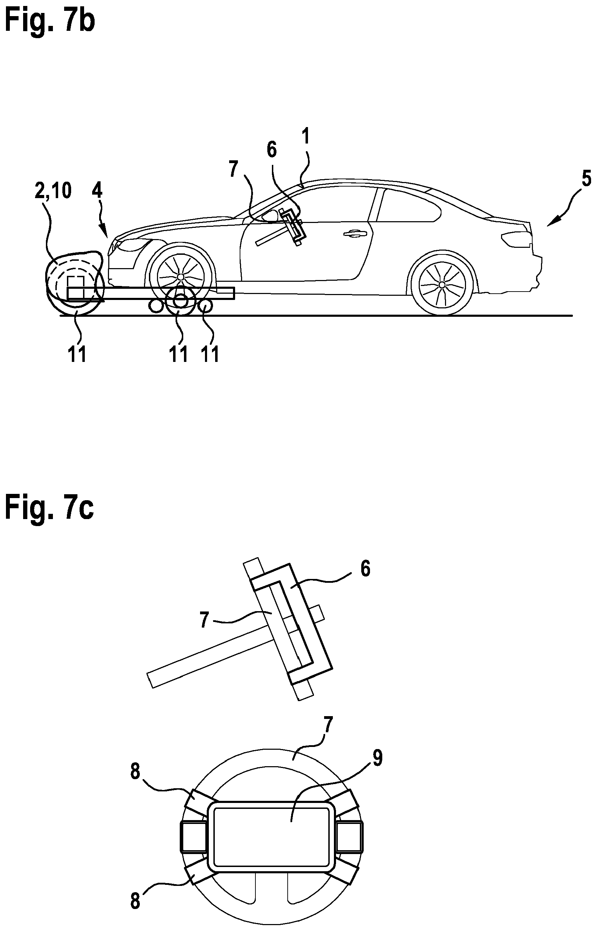

Fig. 7a) to c) show a vehicle 1 and a device 10 according to a seventh preferred embodiment of the invention. The device 10 is arranged at the front 4 of the vehicle 1 such that the front 4 is enclosed by the device 10. The device 10 comprises a plurality of wheels 11 by means of which the vehicle 1 is held up thereby lifting the front wheels of the vehicle 1 from the ground. Accordingly, the vehicle 1 is again pulled by the device 10 or rather the electric power train 2 of the device 10.

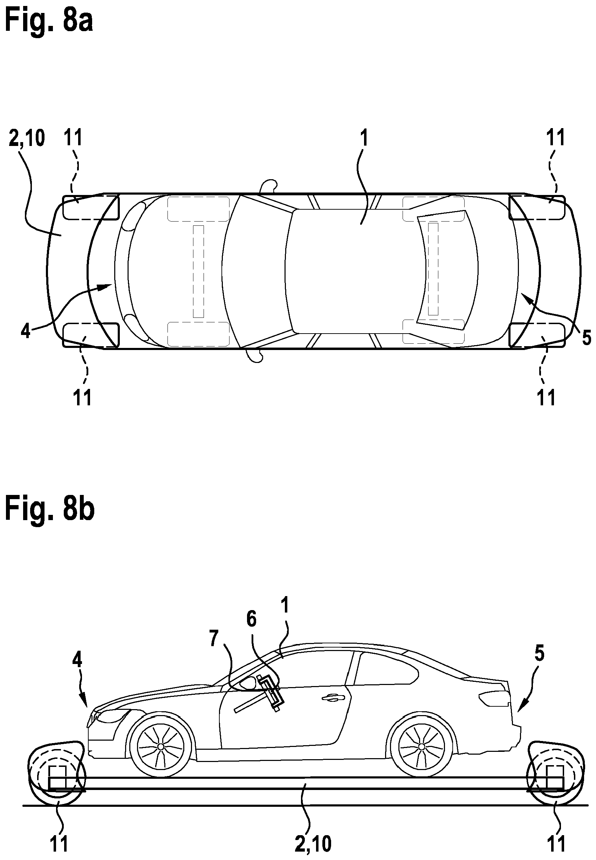

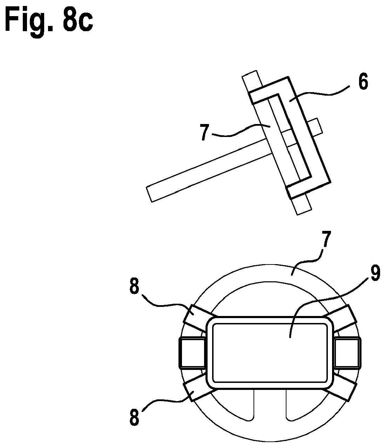

Fig. 8a) to c) show a vehicle 1 and a device 10 according to an eighth preferred embodiment of the invention. The device 10 is designed like a chassis having front wheels 11 and rear wheels 11, such that in operation the vehicle 1 is carried by the device 10. For connecting the device 10 with the vehicle 1 the vehicle 1 is simply parked on the device 10.

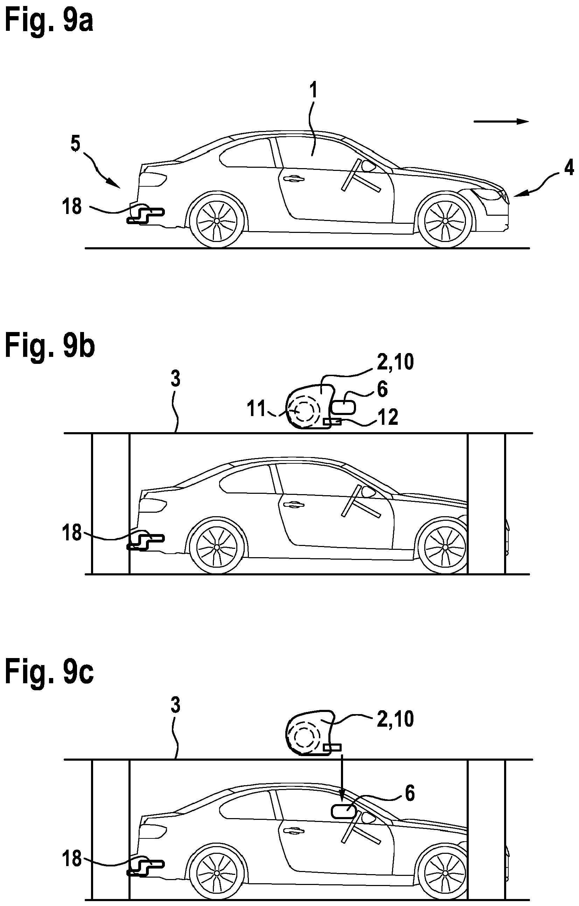

Fig. 9a) to i) show the steps necessary for connecting a device 10 with a vehicle 1 if the vehicle 1 cannot simply be parked on the device 10.

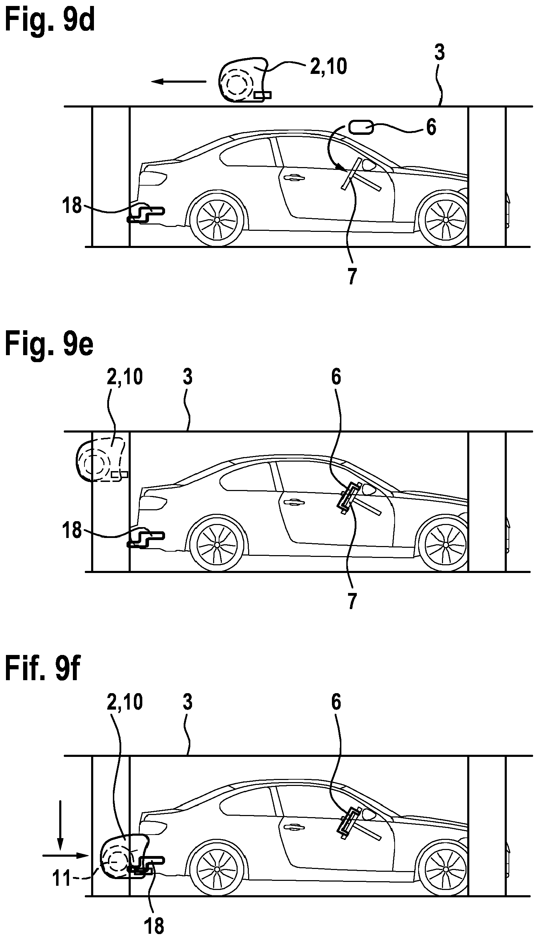

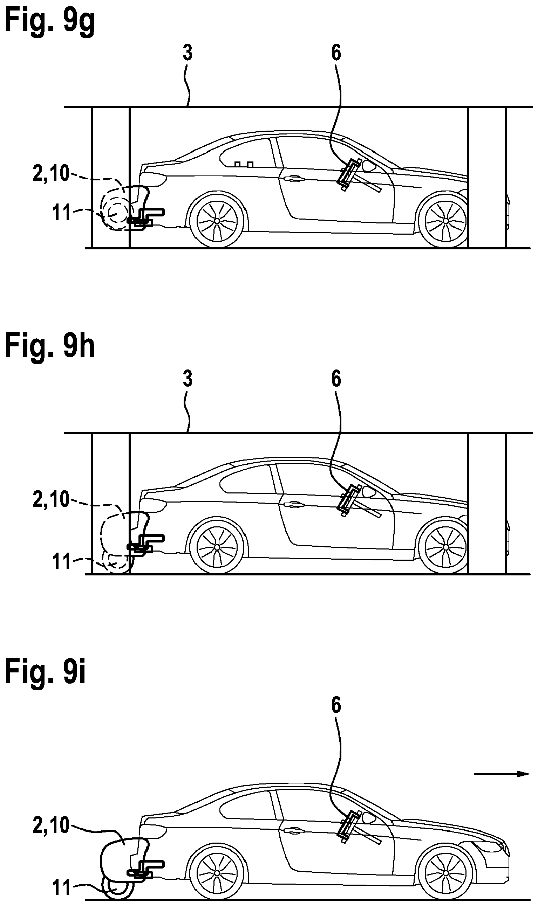

Fig. 9 a) shows a vehicle 1 having an internal combustion engine so that the vehicle 1 is not allowed to enter a zero-emission zone within an urban area. According to the invention, the vehicle 1 is equipped with a device 10 having an electric power train 2 in order to drive the vehicle 1 while the internal combustion engine is shut off. A plurality of such devices 10 each having an electric power train 2 are stored at a facility 3 for storing and/or charging the electric power trains 2 or rather the batteries of the electric power trains 2. In Fig. 9 b) the vehicle 1 is arriving at such a facility 3 for storing and/or charging.

A device 10 for operating the vehicle 1 comes along with a control device 6 in the form of a control pad that is attached to the steering wheel 7 of the vehicle 1 (see Fig. 9 c) and d)). The device 10 itself is attached to the back 5 of the vehicle 1, preferably at a tow bar position 18, such that the tow bar can be used for connection (see Fig. 9 e) and f)). After attaching the device 10 to the vehicle 1, a wheel 11 of the device 10 is lowered such that the wheel 11 contacts the ground thereby lifting the rear wheels of the vehicle 1 from the ground (see Fig. 9g) and h)). The device 10 is now ready for operation. After the driver has indicated a destination within the zero-emission zone of the urban area, the device 10 drives the vehicle 1 out of the facility 3 to the desired destination (see Fig. 9 i)).

## Claims

1. A method for operating a power-driven vehicle (1) having an on-board engine, in particular an internal combustion engine, within an urban area,
**characterized in that** when entering the urban area the vehicle (1) is temporarily connected with an off-board electric power train (2) and the on-board engine of the vehicle (1) is shut off.

2. A method according to claim 1,
**characterized in that** the off-board electric power train (2) is disconnected from the vehicle (1) after the vehicle (1) has been parked, preferably autonomously parked, within the urban area or when leaving the urban area.

3. A method according to claim 1 or 2,
**characterized in that** the off-board electric power train (2) drives the vehicle (1) autonomously.

4. A method according to any one of the preceding claims,
**characterized in that** the off-board electric power train (2) is connected to the vehicle (1) and/or disconnected from the vehicle (1) at a facility (3) for storage and/or charging a plurality of off-board electric power trains (2).

5. A method according to any one of the preceding claims,
**characterized in that** the off-board electric power train (2) is mechanically connected to the vehicle (1), preferably to the front (4) and/or to the back (5) of the vehicle (1).

6. A method according to any one of the preceding claims,
**characterized in that** the off-board electric power train (2) is connected, preferably wirelessly, to an on-board control unit of the vehicle and/or an off-board control device (6).

7. A method according to any one of the preceding claims,
**characterized in that** the vehicle (1) and/or the off-board electric power train (2) is/are connected, preferably wirelessly, to a communication network and/or an external server in order to receive data related to the actual geographical position of the vehicle (1) and/or the off-board electric power train (2), the actual traffic volume, actual road conditions, road works and/or free parking spaces.

8. A method according to any one of the preceding claims,
**characterized in that** the off-board electric power train (2) interacts with the environment, preferably with other vehicles (1), other off-board electric power trains (2), cyclists, pedestrians and/or facilities for traffic management.

9. A device (10) for operating a power-driven vehicle (1) having an on-board engine, in particular an internal combustion engine, within an urban area,
**characterized by** an electric power train (2) connectable to the vehicle (1) such that the electric power train (2) of the device (10) drives the vehicle (1) while the on-board engine of the vehicle (1) is shut off.

10. A device (10) according to claim 9,
**characterized by** at least one rechargeable battery providing a current.

11. A device (10) according to claim 9 or 10,
**characterized by** at least one wheel (11) holding up the device (10).

12. A device (10) according to any one of preceding claims 9 to 11,
**characterized by** fastening means (12) to mechanically fasten the device (10) to the vehicle (1), wherein the fastening means (12) preferably comprise at least one flange (13) and/or screws (14).

13. A device (10) according to any one of preceding claims 9 to 12,
**characterized by** transmission means (15), wherein the transmission means (15) preferably comprise a belt or a chain.

14. A device (10) according to any one of preceding claims 9 to 13,
**characterized by** a control device (6) attachable to the vehicle (1), preferably attachable to a steering wheel (7) of the vehicle (1), comprising clamps (8) and/or a display (9).
